# Europäisches Patentamt

# European Patent Office

# Office européen des brevets

(19)

(11) Veröffentlichungsnummer: **0 116 275 B1**

(12) **EUROPÄISCHE PATENTSCHRIFT**

(45) Veröffentlichungstag der Patentschrift:
15.07.87

(51) Int. Cl.⁴: **H 02 J 3/18**

(21) Anmeldenummer: **84100127.4**

(22) Anmeldetag: **09.01.84**

(54) Blindleistungskompensator.

(30) Priorität: **08.02.83 EP 83200196**

(43) Veröffentlichungstag der Anmeldung:
**22.08.84 Patentblatt 84/34**

(45) Bekanntmachung des Hinweises auf die Patenterteilung:
**15.07.87 Patentblatt 87/29**

(84) Benannte Vertragsstaaten:
**CH DE LI SE**

(56) Entgegenhaltungen:
**DE - A - 2 303 939
DE - C - 616 527
US - A - 3 731 183
US - A - 4 292 545**

**BBC-NACHRICHTEN, Band 59, Nr. 3/4, 1977, Seiten 152-158, Mannheim, DE; P. WETZEL: "Thyristorschutz mit Haibleitern - wirtschaftlich und sicher"
ELEKTRONIK, Band 31, Nr. 18, September 1982, Seiten 99-102, München, DE; P. BROGL:
"Überspannungsschutz mit Metalloxidvaristoren"**

(73) Patentinhaber: **BBC Aktiengesellschaft Brown, Boveri & Cie., Haselstrasse, CH-5401 Baden (CH)**

(72) Erfinder: **Dobsa, Josip, Dipl.-Ing., Luxmattenstrasse 27, CH-5452 Oberrohrdorf (CH)**
Erfinder: **Mauchle, Peter, Dipl.-Ing., Bahnhofstrasse 9, CH-5430 Wettingen (CH)**
Erfinder: **Pfyl, Walter, Dipl.-Ing., Schlierenstrasse 40, CH-5400 Ennetbaden (CH)**
Erfinder: **Sadek, Kadry, Dr. Ing., Silcherweg 5, D-7898 Lauchringen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei der Erfindung wird ausgegangen von einem Blindleistungskompensator nach dem Oberbegriff des Patentanspruch 1.

Mit diesem Oberbegriff nimmt die Erfindung auf einen Stand der Technik von Blindleistungskompensatoren Bezug, wie er in der DE-PS 2 303 939 beschrieben ist. Dort wird ein Kompensationskondensator in der dem Einschaltzeitpunkt vorangehenden Viertelperiode der Wechselspannung auf den Scheitelwert der Netzwechselspannung vorgeladen und mittels eines Thyristorschalters über eine Drossel an das zu kompensierende Wechselstromnetz geschaltet, wenn die Spannung am Thyristorschalter etwa 0 ist. In einer Viertelperiode der Netzwechselspannung nach dem Abschaltzeitpunkt des Kondensators wird dieser durch Zünden des Thyristorschalters entladen. Ist bei einer derartigen Anordnung der Thyristorschalter geschlossen, also elektrisch leitend, und damit der Kondensator dem Wechselspannungsnetz zugeschaltet, so entspricht die Spannung am Kondensator in jedem Augenblick der Netzspannung. Wird der Kondensator durch Öffnen des Thyristorschalters vom Wechselspannungsnetz getrennt, so übernimmt der Thyristorschalter zum Schaltzeitpunkt die Kondensatorspannung und in der Folge, mit der Veränderung der Kondensatorspannung und der Netzspannung, jeweils die Differenzspannung aus beiden. Die Kondensatorspannung nimmt durch die Entladung des Kondensators über den ihm parallelgeschalteten Entladekreis zumindest im Mittel zeitlich ab. In der Regel wird der Kondensator im Stromnulldurchgang, d.h. zum Zeitpunkt maximaler Netzspannung, vom Wechselspannungsnetz getrennt. Ist die Entladung des Kondensators über den Entladekreis im Vergleich zur Schwingungsdauer der Wechselspannung ein langsamer Vorgang, so tritt am Thyristorschalter nach einer halben Schwingungsdauer praktisch die doppelte maximale Netzspannung auf. Um den Thyristorschalter nur für eine einfache maximale Netzspannung bemessen zu müssen, was aus wirtschaftlichen Gründen von erheblichem Vorteil ist, muss sich der Kondensator über seinen Entladekreis schnell genug, längstens während einer halben Periode der Wechselspannung entladen können. Die Dauer einer halben Periode beträgt bei einer Frequenz der Wechselspannung von 50 Hz 10 ms. Der Kondensator weist üblicherweise eine Kapazität in der Grössenordnung von einigen 100 µF auf. Damit sich eine so grosse Kapazität in 10 ms überhaupt entladen kann, muss der Entladekreis niederohmig sein. Ein rein ohmscher Widerstand im Entladekreis dürfte z.B. nur wenige Ω betragen, was für den Kondensator praktisch einen Kurzschluss mit entsprechend hoher Verlustleistung darstellt, welche bei Zuschaltung des Kondensators zum Wechselspannungsnetz nicht tolerierbar ist. Begrenzen lässt sich diese Verlustleistung durch einen im Entladekreis angeordneten Schalter, vornehmlich einen schnellwirkenden Halbleiterschalter, der während der Zuschaltung des Kondensators zum Wechselspannungsnetz offen ist und erst beim Trennen des Kondensators vom Wechselspannungsnetz zur Einleitung der Entladung geschlossen wird. Ein solcher Schalter muss für die volle maximale Netzspannung bemessen sein und ist deshalb ebenfalls wirtschaftlich aufwendig.

Aus der eingangs erwähnten DE-PS 2 303 939 ist es bekannt, den Kondensator über einen Transformator in ein Hilfsspannungsnetz zu entladen. Die Induktivität der im Entladekreis angeordneten Primärwicklung des Transformators bildet zusammen mit der Induktivität einer gleichfalls im Entladekreis angeordneten Drossel und der Kapazität des Kondensators einen Schwingkreis. Auch bei dieser Anordnung ist ein Schalter im Entladekreis erforderlich, durch welchen zum Zeitpunkt der Trennung des Kondensators vom Wechselspannungsnetz eine freie Ausgleichsschwingung eingeschaltet und anschliessend wieder unterbrochen werden kann.

Die Erfindung, wie sie in den Patentansprüchen gekennzeichnet ist, löst die Aufgabe, einen Blindleistungskompensator anzugeben, der spannungsmässig gering belastet wird und im Entladekreis des Kompensationskondensators keine Schaltelemente benötigt.

Ein Vorteil der Erfindung besteht darin, dass eine schnelle und kontinuierliche Entladung des Kondensators, nach dessen Abschalten vom Wechselspannungsnetz, ohne irgendwelche störungsanfällige und teure Schaltelemente im Entladekreis des Kondensators erfolgt. Dies wird mit einfachen Mitteln erreicht.

Gemäss einer besonderen Ausgestaltung der Erfindung kann eine speziell dimensionierte Eisendrosselspule verwendet werden, wobei ggf. noch eine zweite Wicklung für eine besonders schnelle Ummagnetisierung des Eisenkerns vorgesehen ist. Anstelle dieser Eisendrosselspule kann auch ein speziell dimensionierter Transformator mit einem Kurzschlussschalter in dessen Sekundärkreis verwendet werden, der ebenfalls eine sehr schnelle Ummagnetisierung und damit eine schnelle Entladung des Blindlastkondensators ermöglicht. Damit wird erreicht, dass die Ventilspannung relativ niedrig ist und somit Kosten für teure Hochspannungsthyristoren eingespart werden.

Gemäss einer weiteren vorteilhaften Ausgestaltung der Erfindung kann die Zerstörung von Thyristorventilen auch bei einer doppelten Fehlzündung mit Sicherheit vermieden werden.

Zum einschlägigen Stand der Technik wird zusätzlich auf die US-PS 3 731 183 verwiesen, aus der eine Schaltung zur Kompensation von Blindleistung zur Leistungssteuerung und Korrektur des Phasenwinkels einer induktiven Last bekannt ist, welche eine über einen Transformator und ein Wechselspannungsnetz angeschlossene Reihenschaltung eines Kondensators, einer Drossel, ggf. eines Widerstandes und eines Thyristorventils aufweist. Parallel zu dem Thyristorventil kann eine Reihenschaltung aus einem Widerstand und einem Kondensator vorgesehen sein, parallel zu dem Kondensator eine Reihenschaltung aus einer Luftspule (Induktionsofen) und einem Entladewiderstand für den Kondensator. Dieser Widerstand ist auch mit der Sekundärseite des Transformators verbunden. Varistoren als Überspannungsableiter sind nicht vorgesehen, so dass die Entladung des Kondensators relativ langsam erfolgt. Die Drossel dient zur Dämpfung von Schwingungen, die zwischen benachbarten Saugkreisen auftreten können.

Die Erfindung wird nachstehend anhand der in den Zeichnungen dargestellten Ausführungsbeispiele erläutert. Es zeigen:

Fig. 1 ein Schaltbild einer ersten Ausführungsform der Erfindung mit einer Eisendrossel im Entladekreis,

Fig. 2 ein Schaltbild einer zweiten Ausführungsform der Erfindung mit einem Transformator im Entladekreis,

Fig. 3 in einem Diagramm die Magnetisierungscharakteristik eines Eisenkerns der Drossel,

Fig. 4 ein Schaltbild einer dritten Ausführungsform der Erfindung mit Überspannungsableitern,

Fig. 5 ein Diagramm für den zeitlichen Verlauf von Strom- und Spannungsgrössen bei zum Kondensator parallelgeschalteter Sättigungsdrossel im ungestörten Fall, nach dem Abschalten des Kompensationskondensators,

Fig. 6 ein Diagramm gemäss Fig. 5 im Falle einer Fehlzündung eines Thyristorventils, und

Fig. 7 ein Diagramm für den gestrichelt dargestellten Zeitbereich in Fig. 6 in einem anderen Zeitmassstab.

In den Figuren sind übereinstimmende Teile und Grössen mit übereinstimmenden Bezugszeichen versehen.

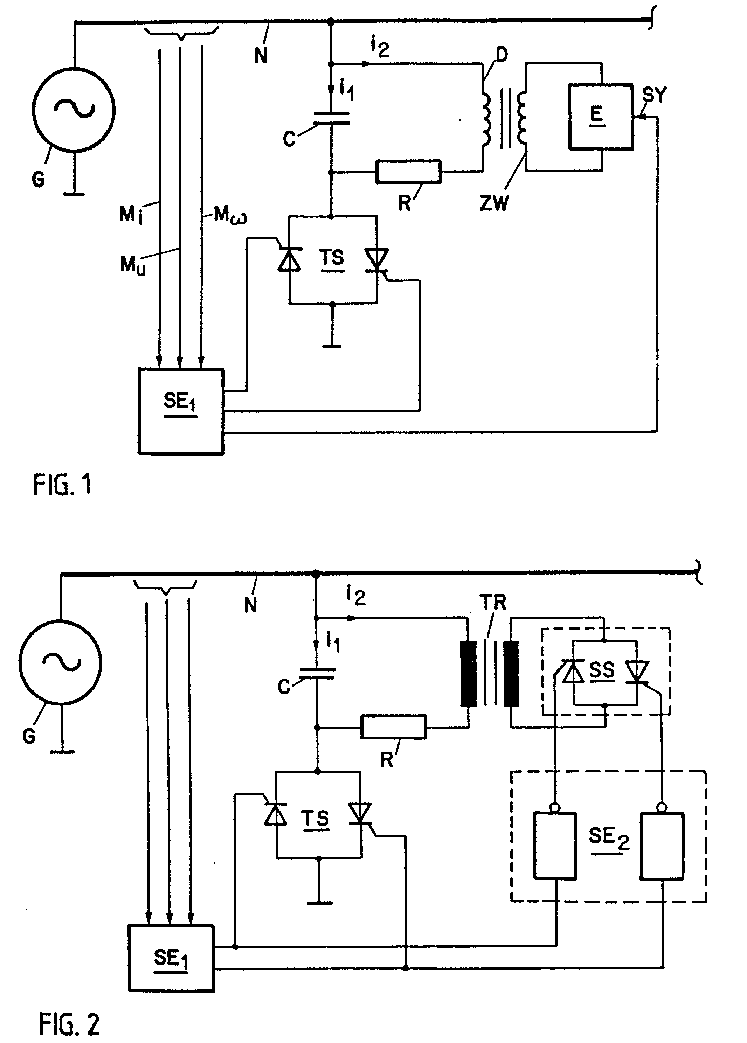

In Fig. 1 ist mit N eine Leitung eines elektrischen Wechselspannungsnetzes bezeichnet, welches von einem Generator G gespeist wird. An das Netz N angeschlossen ist ein Blindleistungskondensator C in Reihe mit einem z.B. aus antiparallelen Thyristoren aufgebauten Thyristorschalter TS. Die Zündelektroden der Thyristoren des Thyristorschalters TS stehen mit einer ersten Steuereinheit $SE_1$ in Verbindung. Diesen sind als Eingangsgrössen vom Wechselspannungsnetz N abgeleitete elektrische Strom-, Spannungs- und Frequenzsignale $M_i$, $M_u$, $M\omega$ zugeführt. Die erste Steuereinheit $SE_1$ erzeugt aus diesen Signalen in an sich bekannter und deshalb auch nicht näher erläuteter Weise bei Bedarf an Blindleistung im Wechselspannungsnetz N phasenrichtig Zündimpulse für die Thyristoren des Thyristorschalters TS. Dem Kondensator C ist ein Entladekreis parallel geschaltet, welcher als variablen Blindwiderstand eine mit einem Eisenkern versehene Entladekreis-Drossel D aufweist. Der ohmsche Wirkwiderstand der Drosselwicklung ist mir R bezeichnet und separat von der Entladekreis-Drossel D dargestellt.

Der Kondensator C bildet zusammen mit der Entladekreis-Drossel D einen Schwingkreis. Dieser liegt als Parallelschwingkreis in Reihe mit dem Thyristorschalter TS am Wechselspannungsnetz N. Ist der Thyristorschalter TS geschlossen, wenigstens einer der beiden in Fig. 1 dargestellten antiparallelen Thyristoren nach der Zündung durch die erste Steuereinheit $SE_1$ leitend, so wird dem Parallelschwingkreis eine Schwingung mit der Frequenz der Wechselspannung im Wechselspannungsnetz N, d.h. der Netzfrequenz $\omega_N$, aufgezwungen. Für die Ströme $i_1$ über den Kondensator C und $i_2$ über die Entladekreis-Drossel D sowie den Widerstand R gilt nach den Kirchhoff'schen Gesetzen für die Parallelschaltung, dass sie sich umgekehrt verhalten wie die Widerstände in den parallelen Zweigen. Durch Verwendung einer genügend grossen Induktivität der Entladekreis-Drossel D lässt sich erreichen, dass der Strom im Kondensatorzweig $i_1$ den Strom im Drosselzweig $i_2$ um einige (z.B. 3 bis 4) Zehnerpotenzen übersteigt. Gegenüber der im Kondensatorzweig auftretenden Blindleistung fällt die Verlustleistung im Drosselzweig, genauer im ohmschen Widerstand R, dann nicht ins Gewicht. Der Entladekreis des Kondensators C kann deshalb in vorteilhafter Weise auch während der Zuschaltung zum Wechselspannungsnetz dauernd geschlossen sein. Ein Schaltelement im Entladekreis ist überflüssig.

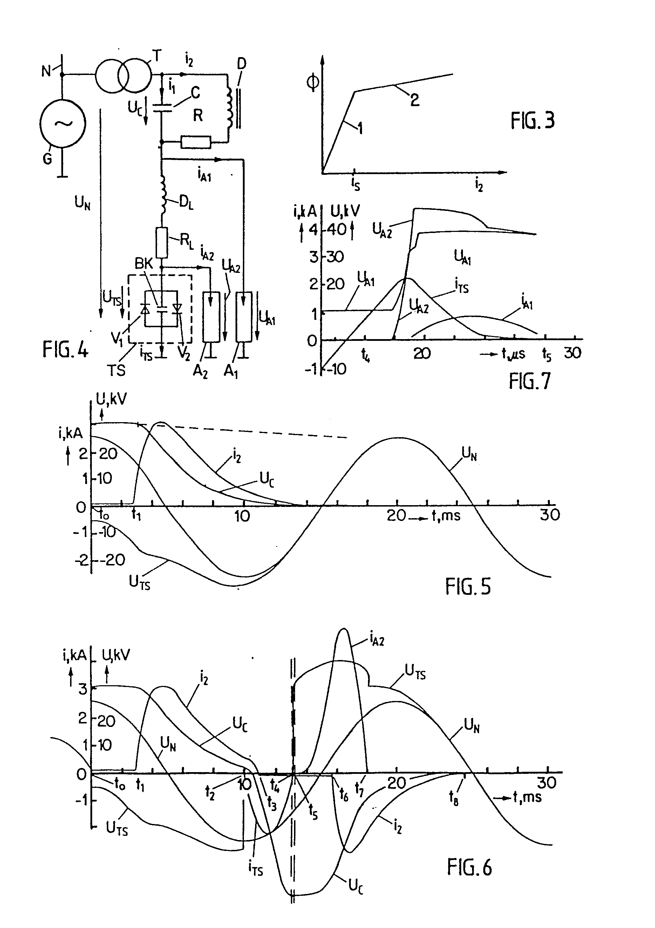

Fig. 3 zeigt die Magnetisierungscharakteristik des Eisenkerns der Entladekreis-Drossel D. Der Induktionsfluss $\Phi$ ist dabei über dem Strom $i_2$ durch die Entladekreis-Drossel D aufgetragen und setzt sich, stark idealisiert, aus zwei mit 1 und 2 bezeichneten Geradenabschnitten zusammen. Bei kleinen Stromwerten steigt der Induktionsfluss steil an (Geradenabschnitt 1). In diesem Bereich ist der Eisenkern ungesättigt und die Induktivität der Entladekreis-Drossel D, die sich aus der Steigung des Geradenabschnittes ergibt, gross. Bei einem Sättigungsstromwert $i_S$ ist der Eisenkern gesättigt. Der Induktionsfluss $\Phi$ steigt oberhalb dieses Sättigungsstromwertes $i_S$ nur noch langsam an. Im Sinne der Erfindung ist anzustreben, den Geradenabschnitt 1 möglichst steil und den Geradenabschnitt 2 möglichst flach zu gestalten. Ersteres lässt sich unter anderem durch Verwendung eines in sich geschlossenen, etwa toroidförmigen Eisenkerns erreichen. Dadurch wird die Streuung des Induktionsflusses $\Phi$ weitgehend ausgeschaltet. Letzteres lässt sich u.a. durch eine gleichmässige Verteilung der Drosselwicklung über den Eisenkern erreichen. Dadurch wird das die Grösse der Luftinduktivität mitbestimmende Verhältnis von Windungszahl zur Länge der Entladekreis-Drossel D minimal.

Der Sättigungsfluss wird vorzugsweise auf ungefähr das 1,3-fache des Flusses bemessen, welcher die Entladekreis-Drossel D mit Netzfrequenz $\omega_N$ bei Zuschaltung des Kondensators C an das Wechselspannungsnetz N durchflutet.

Damit ist dem Auftreten von geringen Überspannungen im Wechselspannungsnetz N und damit verbundenen Überströmen Rechnung getragen, bei welchen die Entladekreis-Drossel D noch nicht gesättigt sein soll.

Die Sättigungseigenschaft der Entladekreis-Drossel D kommt erst zum Tragen, sobald der Kondensator C durch Öffnen des Thyristorschalters TS vom Wechselspannungsnetz N getrennt wird. Ab diesem Zeitpunkt wird dem Schwingkreis aus Kondensator C und Entladekreis-Drossel D nicht länger eine Schwingung mit der vom Wechselspannungsnetz N vorgegebenen Netzfrequenz $\omega_N$ aufgezwungen. Der Schwingkreis schwingt frei mit der ihm eigenen Frequenz, d.h. seiner durch die Kapazität des Kondensators C, die Induktivität der ungesättigten Entladekreis-Drossel D und dem ohmschen Widerstand R bestimmten Eigenfrequenz $\omega_E$ gedämpft weiter. Als Folge der Bemessung der Entladekreis-Drossel, dass bei Zuschaltung des Kondensators C zum Wechselspannungsnetz N der Strom $i_1$ über den Kondensator den Strom $i_2$ über die Drossel erheblich übersteigt, ergibt sich, dass die Eigenfrequenz $\omega_E$ wesentlich kleiner ist als die Netzfrequenz $\omega_N$. Wegen der geringeren Eigenfrequenz $\omega_E$ stellt die Drossel für die freie, gedämpfte Schwingung einen kleineren Widerstand dar, als für die erzwungene Schwingung mit der Netzfrequenz $\omega_N$. Da der Kondensator C jeweils bei maximaler Netzspannung vom Wechselspannungsnetz N getrennt wird, liegt als Anfangswert der freien gedämpften Schwingung am Kondensator C ebenfalls die maximale Netzspannung $U_N$ an. Unter diesen Bedingungen übersteigt der Strom durch die Entladekreis-Drossel D bei der freien, gedämpften Schwingung den Strom der erzwungenen Schwingung erheblich und treibt den Eisenkern der Entladekreis-Drossel D in die Sättigung.

Bei Eintritt der Sättigung nimmt die Induktivität und mit ihr der Widerstand der Entladekreis-Drossel D ab, wodurch der Strom durch die Entladekreis-Drossel D als auch die Eigenfrequenz $\omega_E$ der freien, gedämpften Schwingung zunehmen. Die Folge ist eine schnelle Entladung des Kondensators C.

Der Dämpfungswiderstand R der Wicklung der Entladekreis-Drossel D wird vorzugsweise so gewählt, dass die Entladung des Kondensators quasi einer RC-Entladung mit aperiodischer Dämpfung entspricht, mit

$$R = 2\sqrt{L/C},$$

wobei L die Induktivität der Entladekreis-Drossel D im gesättigten Bereich bedeutet.

Der ohmsche Widerstand R ist vorzugsweise der Wirkwiderstand der Wicklung der Entladekreis-Drossel D, für welche beispielsweise ein Material mit einem höheren spezifischen Widerstand als Kupfer oder Aluminium verwendet wird.

Zusammenfassend ergibt sich aus dem Vorstehenden, dass die Entladekreis-Drossel D durch die Sättigungseigenschaft ihres Eisenkerns im Entladekreis als variabler Blindwiderstand wirkt, der bei Zuschaltung des Kondensators C zum Wechselspannungsnetz N, d.h. bei geschlossenem Thyristorschalter TS, grösser ist, als wenn der Kondensator C bei geöffnetem Thyristorschalter TS vom Wechselspannungsnetz N getrennt ist. Der Unterschied zwischen diesen beiden Zuständen ist dabei so erheblich, dass im erstgenannten Fall im Entladekreis nur ein kleiner, nicht ins Gewicht fallender Strom $i_2$ fliesst, während im zweiten Fall ein grosser, den Kondensator C in weniger als einer halben Periode der Wechselspannung entladender Strom $i_2$ fliessen kann. Weiter kann der Entladekreis dauernd geschlossen sein. Eine Unterbrechung des Entladekreises während der Zuschaltung des Kondensators C zum Wechselspannungsnetz N ist nicht erforderlich.

Vorteilhafterweise ist um den Eisenkern einer Entladekreis-Drossel D, wie in Fig. 1 dargestellt, noch eine Zusatzwicklung ZW gelegt, an die eine Einrichtung E zur beschleunigten Ummagnetisierung des Eisenkerns angeschlossen ist. Diese steht über eine Steuerleitung SY zur Synchronisation mit der ersten Steuereinheit $SE_1$ in Verbindung. Damit kann die Zeitspanne, die nach der Trennung des Kondensators C vom Wechselspannungsnetz N und dem Einsetzen der freien, gedämpften Schwingung vergeht, bis der Strom in der Entladekreis-Drossel D soweit angestiegen ist, dass Sättigung eintritt, stark verkürzt werden. Durch den Hystereseeffekt fliesst in der Entladekreis-Drossel D zum Zeitpunkt der Trennung des Kondensators C vom Wechselspannungsnetz N bereits – bei maximaler Netzspannung und verschwindendem Induktionsfluss $\Phi$ in der Entladekreis-Drossel D – ein Magnetisierungsstrom mit der richtigen Polarität, der nach dem Einsetzen der freien, gedämpften Schwingung bereits nach wenigen Millisekunden den Sättigungswert $i_S$ erreicht.

Gemäss einer weiteren, in Fig. 2 dargestellten Ausführungsform der Erfindung, ist im Entladekreis als variabler Blindwiderstand ein Transformator TR vorgesehen. Dieser ist mit einer Primärseite in den Entladekreis geschaltet. Im Sekundärkreis des Transformators TR ist ein steuerbares Schaltelement SS angeordnet. Mit dem steuerbaren Schaltelement SS kann der Sekundärkreis des Transformators TR kurzgeschlossen und aufgetrennt werden. Das steuerbare Schaltelement SS ist vorzugsweise aus antiparallelen Thyristoren aufgebaut. Dem steuerbaren Schaltelement SS zugeordnet ist eine zweite Steuereinheit $SE_2$, welche, wie die erste Steuereinheit $SE_1$, Zündimpulse für die Thyristoren erzeugt. Zur Synchronisation ist eine zweite Steuereinheit $SE_2$ mit der ersten Steuereinheit $SE_1$ gekoppelt. Die zweite Steuereinheit $SE_2$ erzeugt genau dann Zündimpulse für die Thyristoren des steuerbaren Schaltelementes SS, wenn die erste Steuereinheit $SE_1$ gerade keine Zündimpulse für die Thyristoren des Thyristorschalters TS erzeugt und umgekehrt. Die zweite Steuereinheit $SE_2$ braucht das Steuersignal der ersten Steuereinheit $SE_1$ daher lediglich zu negieren. Damit wird erreicht, dass das steuerbare Schaltelement SS immer gegensinnig zum Thyristorschalter TS geöffnet bzw. geschlossen ist.

Bei dieser Ausführungsform der Erfindung wird die Tatsache ausgenutzt, dass bei offenem Sekundärkreis des Transformators TR in dessen Primärkreis die volle Induktivität der Primärwicklung, die sogenannte Leerlaufinduktivität, wirksam ist, wogegen bei geschlossenem Sekundärkreis die sogenannte Kurzschluss- oder Streuimpedanz des Transformators wirksam ist. Der Transformator TR wirkt demzufolge mit offenem Sekundärkreis als grosser Blindwiderstand im Entladekreis (während der Zuschaltung des Kondensators C zum Wechselspannungsnetz), so dass im Entladekreis, wie vorstehend bei der Entladekreis-Drossel D erläutert, nur ein kleiner Strom $i_2$ fliessen kann. Mit geschlossenem Sekundärkreis wirkt der Transformator TR als kleiner Blindwiderstand (wenn der Kondensator vom Wechselspannungsnetz N getrennt ist), so dass sich, wie vorstehend ebenfalls bei der Entladekreis-Drossel erläutert, der Kondensator C schnell durch eine freie, gedämpfte Schwingung entladen kann. Auch bei dieser Ausführungsform der Erfindung ist ein Schaltelement im Entladekreis überflüssig. Das steuerbare Schaltelement SS im Sekundärkreis des Transformators TR bietet gegenüber einem Schaltelement im Entladekreis den grossen Vorteil, dass es nur für eine heruntertransformierte und deshalb wesentlich geringere Sekundärspannung des Transformators TR ausgelegt zu sein braucht.

Bei der in Fig. 4 dargestellten dritten Ausführungsform der Erfindung ist der Kondensator C über einen Transformator T an das Wechselspannungsnetz N angeschlossen. Parallel zum Kondensator C ist wieder die Entladekreis-Drossel D mit ihrem Wirkwiderstand R geschaltet. Im Kreis mit dem Kondensator C und dem Thyristorschalter TS ist zur Begrenzung des Ventilstromes $i_{TS}$ bei transienten Vorgängen eine Luftdrossel $D_L$ geschaltet, deren Wirkwiderstand mit $R_L$ bezeichnet ist.

Der Thyristorschalter TS weist zwei antiparallelgeschaltete Thyristoren $V_1$ und $V_2$ parallel zu einem Beschaltungskondensator BK auf. $i_{TS}$ und $U_{TS}$ bezeichnen den Ventilstrom und die Ventilspannung am Thyristorschalter TS. Parallel zu der Reihenschaltung aus Luftdrossel $D_L$ und Thyristorschalter TS ist ein erster Varistor bzw. Überspannungsableiter $A_1$ geschaltet und parallel zu dem Thyristorschalter TS ein zweiter Varistor bzw. Überspannungsableiter $A_2$. Beide Überspannungsableiter $A_1$ und $A_2$ sind spannungsabhängige Widerstände aus einem Metalloxid, vorzugsweise aus Zinkoxid, deren Widerstandswert sich ab einem vorgebbaren Schutzniveau bzw. Schutzspannungswert mit zunehmender Spannung erniedrigt. Das Schutzniveau des ersten Überspannungsableiters $A_1$ ist vorzugsweise grösser als die zweifache Amplitude der Netzspannung $U_N$, die auf der Sekundär- bzw. Niederspannungsseite des Transformators T auftritt. Das Schutzniveau des zweiten Überspannungsableiters $A_2$ ist vorzugsweise gleich gross oder grösser als das Schutzniveau des ersten Überspannungsableiters $A_1$; leistungsmässig ist der zweite Überspannungsableiter $A_2$ jedoch schwächer ausgelegt als der erste Überspannungsableiter $A_1$. Die Ströme durch die Überspannungsableiter $A_1$ und $A_2$ sind mit $i_{A1}$ und $i_{A2}$ bezeichnet, die bei Stromdurchgang auftretenden Spannungsabfälle mit $U_{A1}$ und $U_{A2}$.

Die Wirkung der Schaltung gemäss Fig. 4 wird nachfolgend anhand der Fig. 5 bis 7 erläutert, in denen auf der Ordinate der Strom i in kA und die Spannung U in kV aufgetragen sind und auf der Abszisse die Zeit t in ms (Fig. 5 und 6) bzw. in ein µs (Fig. 7).

Fig. 5 zeigt beim Abschalten des Kompensationskondensators den Zeitverlauf der sinusförmigen Netzspannung $U_N$, der Spannung $U_C$ des Blindleistungskondensators C, der Ventilspannung $U_{TS}$ und des Kondensator-Entladestromes $i_2$ für den ungestörten Fall. Für die Ventilspannung $U_{TS}$ gilt:

$$U_{TS} = U_N - U_C.$$

Vom Ausschaltzeitpunkt $t_0$ des Thyristorschalters TS bis zum Zeitpunkt $t_1$, an dem der Eisenkern der Entladekreis-Drossel D in Sättigung gerät, ist die Kondensatorspannung $U_C$ etwa konstant und der Kondensatorentladestrom $i_2$ gering, aufgrund des hohen Widerstandes der Entladekreis-Drossel D. Danach steigt der Kondensatorentladestrom $i_2$ stark an und entlädt den Kondensator C innerhalb einer Halbschwingung der Netzfrequenz $\omega_n$. Die maximale Ventilspannung $U_{TS}$ wird dabei nur etwa 15% höher als die Netzspannungsamplitude.

Ohne Entladekreis mit Entladekreis-Drossel D würde sich der Kondensator C nur sehr langsam entladen, entsprechend der in Fig. 5 gestrichelt dargestellten Linie. Dies hätte zur Folge, dass im Zeitpunkt des Minimums der Netzspannung $U_N$ die Ventilspannung $U_{TS}$ etwa doppelt so gross wie die Netzspannungsamplitude wäre. Für den Thyristorschalter TS müssten relativ teure Thyristoren mit erhöhter Spannungsfestigkeit verwendet oder mehrere Thyristorschalter TS hintereinandergeschaltet werden. Würde nun im ungünstigsten Zeitpunkt eine Fehlzündung eines Thyristors eintreten, so würde eine Umladung des Kondensators C maximal auf die dreifache Netzspannungsamplitude erfolgen. Durch die zur Luftdrossel $D_L$ und zum Thyristorschalter TS parallelgeschalteten Überspannungsableiter $A_1$ und $A_2$ würde die Ventilspannung $U_{TS}$ reduziert werden.

Tritt nun mit Entladekreis-Drossel D gemäss Fig. 4 im ungünstigsten Zeitpunkt $t_2$ eine Fehlzündung z.B. des Thyristors $V_1$ ein, so erfolgt ebenfalls eine Umladung des Kondensators C, wie in Fig. 6 dargestellt. Da der Kondensator aber schon beinahe entladen ist, wird er nur noch maximal auf die zweifache Netzspannungsamplitude umgeladen. Im Zeitpunkt $t_2$ wird die Ventilspannung = 0, und es fliesst ein negativer Ventilstrom $i_{TS}$, welcher etwa zum Zeitpunkt $t_4$ verschwindet, danach kurzzeitig in entgegengesetzter Richtung fliesst, vgl. Fig. 7, und schliesslich, etwa zum Zeit-

punkt $i_5$, verschwindet, wonach der stromführende Thyristor selbsttätig wieder in den Sperrzustand übergeht.

Der Ventilstrom $i_{TS}$ stellt gleichzeitig den Umladestrom für den Kondensator C dar. Der Kondensator C mit seinem Entladekreis bildet zusammen mit der Luftdrossel $D_L$ und der Induktivität des Transformators T, einschliesslich des Wechselspannungsnetzes N, einen Reihenschwingkreis, der den zeitlichen Verlauf des Ventilstromes $i_{TS}$ und der Kondensatorspannung $U_C$ bestimmt. Die Frequenz der Schwingung entspricht der Eigenfrequenz dieses Reihenschwingkreises, welche mittels der Luftdrossel $D_L$ so eingestellt wird, dass sich im Thyristorschalter TS kein zu steiler Anstieg und kein zu hoher Spitzenwert des Ventilstromes $i_{TS}$ ergibt. Dieser Reihenschwingkreis ist als Saugkreis vorzugsweise auf eine Oberschwingung des zu kompensierenden Netzstromes abgestimmt. Die Schwingung wird zum Zeitpunkt $t_5$ unterbrochen. Aufgrund der hohen Kondensatorspannung zum Zeitpunkt $t_5$ und der relativ geringen Netzspannung $U_N$ treten eine hohe Ventilspannung $U_{TS}$ und hohe Ventilspannungen $U_{A1}$, $U_{A2}$ auf. Als Folge davon fliesst zwischen $t_4$ und $t_5$ ein beachtlicher Ableiterstrom $i_{A1}$ im ersten Überspannungsableiter $A_1$. Im Zeitpunkt $t_5$ setzt auch der Ableiterstrom $i_{A2}$ im zweiten Überspannungsableiter $A_2$ ein, der bis zum Zeitpunkt $t_7$ andauert und eine Herabsetzung der Ventilspannung $U_{TS}$ bewirkt. Zum Zeitpunkt $t_6$ ist der Eisenkern der Entladekreis-Drossel D wieder gesättigt, in entgegengesetzter Richtung wie zum Zeitpunkt $t_1$, so dass ein starker Kondensator-Entladestrom $i_2$ einsetzt, der den Kondensator C innerhalb einer halben Periode der Netzfrequenz bis zum Zeitpunkt $t_8$ entlädt. Nach dieser Entladung entspricht die Ventilspannung $U_{TS}$ der Netzspannung $U_N$, wie im ungestörten Fall gemäss Fig. 5.

Erfolgt eine zweite Fehlzündung nunmehr des Thyristors $V_2$ solange der erste Überspannungsableiter $A_1$ noch den Ableiterstrom $i_{A1}$ führt, so wird dieser auf den Ventilstrompfad durch $V_2$ kommutieren und in diesem zu einem Stromanstieg führen. Überwiegt die Steilheit des Stromanstiegs die Ausbreitungsgeschwindigkeit der Leitfähigkeit auf der Fläche des gezündeten Thyristors $V_2$, so könnte dieser, ohne Schutzmassnahme, durch lokale Überhitzung zerstört werden. Als schützende Massnahme wirkt hier die Luftdrossel $D_L$, welche den Stromanstieg begrenzt. Mit dieser Ausführungsform der Erfindung kann eine Zerstörung von Thyristorventilen auch bei einer doppelten Fehlzündung mit Sicherheit vermieden werden.

In den Fig. 1, 2 und 4 ist das Wechselspannungsnetz N der Einfachheit halber einphasig dargestellt. Bei einem mehrphasigen Wechselspannungsnetz ist für jede Phase eine diesen Figuren entsprechende Kompensationsschaltung vorzusehen.

Anstelle eines Thyristorschalters TS können, entsprechend der Höhe der Wechselspannung, bei einem Thyristorschalter TS mehrere Thyristoren in Reihe geschaltet sein und/oder mehrere Thyristorschalter TS hintereinander vorgesehen werden. Bei der Ausführung gemäss Fig. 4 können im Entladekreis des Kondensators C induktive Blindwiderstände, wie in den Schaltungen gemäss Fig. 1 und 2, vorgesehen sein. Die Steuereinheiten für die Zündung der Thyristoren sind in Fig. 4 der Einfachheit halber weggelassen worden.

**Patentansprüche**

1. Blindleistungskompensator
a) mit mindestens einem Thyristorschalter (TS),
b) der mit mindestens einem Kondensator (C) in Reihe geschaltet ist,
c) wobei dem Kondensator (C) ein Entladekreis mit mindestens einem induktiven Blindwiderstand (D, TR) parallelgeschaltet ist, und
d) mit einer ersten Steuereinheit ($SE_1$) für den Thyristorschalter (TS), welche aus Strom- und Spannungsmesssignalen ($M_i$, $M_u$) eines zu kompensierenden Wechselspannungsnetzes (N) Zündimpulse für den Thyristorschalter (TS) erzeugt, dadurch gekennzeichnet,
e) dass der Entladekreis dauernd geschlossen ist, und
f) dass der induktive Blindwiderstand (D, TR) variabel ist, derart, dass er im Betriebszustand bei geschlossenem Thyristorschalter (TS) grösser und bei geöffnetem Thyristorschalter (TS) kleiner in seinem Wert ist.

2. Blindleistungskompensator nach Anspruch 1, dadurch gekennzeichnet,
a) dass der induktive Blindwiderstand eine Entladekreis-Drossel (D) mit Eisenkern ist,
b) dass der Eisenkern der Entladekreis-Drossel (D) bei demjenigen Strom, welcher sie bei geschlossenem Thyristorschalter (TS) durchfliesst, wenigstens weitgehend ungesättigt und bei grösseren Strömen zunehmend gesättigt ist, und
c) dass der Wicklungswiderstand so bemessen ist, dass der Entladevorgang einer stark gedämpften oder aperiodischen Schwingung entspricht.

3. Blindleistungskompensator nach Anspruch 1 oder 2, dadurch gekennzeichnet, dass um den Eisenkern der Entladekreis-Drossel (D) eine Zusatzwicklung (ZW) gelegt ist, an welche eine Einrichtung (E) zur beschleunigten Ummagnetisierung des Eisenkerns angeschlossen ist.

4. Blindleistungskompensator nach einem der Ansprüche 1 bis 3, dadurch gekennzeichnet, dass die Wicklung der Entladekreis-Drossel (D) über den gesamten, vorzugsweise in sich geschlossenen Eisenkern verteilt ist.

5. Blindleistungskompensator nach Anspruch 1, dadurch gekennzeichnet,
a) dass der induktive Blindwiderstand die Impedanz eines Transformators (TR) ist,
b) in dessen Sekundärkreis ein steuerbares Kreiselement (SS) angeordnet ist,
c) das gegensinnig zum Thyristorschalter (TS) geöffnet bzw. geschlossen ist, und
d) dass der Wicklungswiderstand so bemessen ist, dass der Entladevorgang einer stark gedämpften oder aperiodischen Schwingung entspricht.

6. Blindleistungskompensator nach einem der vorhergehenden Ansprüche, dadurch gekennzeichnet,

a) dass der Kondensator (C) über eine Luftdrossel (D_L) mit dem Thyristorschalter (TS) in Reihe geschaltet ist, und

b) dass ein erster Überspannungsableiter (A_1) zu der Reihenschaltung aus der Luftdrossel (D_L) und die dem Thyristorschalter (TS) parallelgeschaltet ist.

7. Blindleistungskompensator nach einem der vorhergehenden Ansprüche, dadurch gekennzeichnet, dass ein zweiter Überspannungsableiter (A_2) direkt zu dem Thyristorschalter (TS) parallelgeschaltet ist.

8. Blindleistungskompensator nach Anspruch 7, dadurch gekennzeichnet,

a) dass das Schutzniveau des ersten Überspannungsableiters (A_1) grösser als das Doppelte der Amplitude der Netzspannung (U_N) ist, und

b) dass der zweite Überspannungsableiter (A_2) ein mindestens gleich hohes Schutzniveau wie der erste Überspannungsableiter (A_1) aufweist.

9. Blindleistungskompensator nach Anspruch 7 oder 8, dadurch gekennzeichnet, dass der zweite Überspannungsableiter (A_2) leistungsmässig schwächer ausgelegt ist als der erste Überspannungsableiter (A_1).

10. Blindleistungskompensator nach einem der Ansprüche 7 bis 9, dadurch gekennzeichnet,

a) dass der erste und/oder der zweite Überspannungsableiter (A_1, A_2) ein Metalloxidableiter,

b) insbesondere ein Zinkoxidableiter ist.

## Claims

1. Reactive-power compensator
a) comprising at least one thyristor switch (TS)
b) which is connected in series with at least one capacitor (C),
c) the capacitor (C) being connected in parallel with a discharge circuit having at least one inductive reactance (D, TR), and
d) comprising a first control unit (SE_1) for the thyristor switch (TS), which generates gating pulses for the thyristor switch (TS) from current and voltage measurement signals (M_i, M_u) of an alternating voltage system (N) to be compensated, characterized in
e) that the discharge circuit is continuously closed and
f) that the inductive reactance (D, TR) is variable in such a manner that its value, in the operating condition, is greater when the thyristor switch (TS) is closed and is smaller when the thyristor switch (TS) is open.

2. Reactive-power compensator according to Claim 1, characterized in
a) that the inductive reactance is a discharge-circuit reactor (D) having an iron core,
b) that the iron core of the discharge-circuit reactor (D) is at least largely unsaturated at the current which flows through it when the thyristor switch (TS) is closed and is increasingly saturated when the currents are greater, and
c) that the winding restistance is dimensioned in such a manner that the discharge process corresponds to a highly-damped or a periodic oscillation.

3. Reactive-power compensator according to Claim 1 or 2, characterized in that around the iron core of the discharge-circuit reactor (D), an additional winding switch (ZW) is placed which is connected to a device (E) for the accelerated remagnetization of the iron core.

4. Reactive-power compensator according to one of Claims 1 to 3, characterized in that the winding of the discharge-circuit reactor (D) is distributed over the entire iron core which is preferably closed in itself.

5. Reactive-power compensator according to Claim 1, characterized in
a) that the inductive reactance is the impedance of a transformer (TR),
b) in the secondary circuit of which a controllable circuit element (SS) is arranged
c) which is opened or closed in the opposite sense to the thyristor switch (TS), and
d) that the winding resistance is dimensioned in such a manner that the discharge process corresponds to a highly-damped or a periodic oscillation.

6. Reactive-power compensator according to one of the preceding claims, characterized in that
a) the capacitor (C) is connected in series with the thyristor switch (TS) via an air choke (D_L) and
b) a first over voltage arrester (A_1) is connected in parallel with the series circuit of the air choke (D_L) and of the thyristor switch (TS).

7. Reactive-power compensator according to one of the preceding claims, characterized in that a second overvoltage arrester (A_2) is connected directly in parallel with the thyristor switch (TS).

8. Reactive-power compensator according to Claim 7, characterized in that
a) the protection level of the first over voltage arrester (A_1) is higher than twice the amplitude of the system voltage (U_N) and
b) the second over voltage arrester (A_2) has a protection level which is at least as high as that of the first over voltage arrester (A_1).

9. Reactive-power compensator according to Claim 7 or 8, characterized in that the power rating of the second over voltage arrester (A_2) is lower than that of the first over voltage arrester (A_1).

10. Reactive-power compensator according to one of Claims 7 to 9, characterized in that
a) the first and/or the second over voltage arrester (A_1, A_2) is a metal oxide arrester,
b) particularly a zinc oxide arrester.

## Revendications

1. Compensateur de puissance réactive
a) avec au moins un interrupteur à thyristor (TS),

b) qui est raccordé en série avec au moins un condensateur (C),

c) condensateur (C) auquel est raccordé en parallèle un circuit de décharge avec au moins une réactance inductive (D, TR), et

d) avec une première unité de commande (SE$_1$) pour l'interrupteur à thyristor (TS), qui produit des impulsions d'allumage pour l'interrupteur à thyristor (TS) à partir de signaux de mesure du courant et de la tension (M$_i$, M$_u$) d'un réseau (N) à tension alternative à compenser, caractérisé en ce que

e) le circuit de décharge est fermé en permanence et que

f) la réactance inductive (D, TR) est variable, de telle sorte qu'en régime sa valeur soit plus grande lorsque l'interrupteur à thyristor (TS) est fermé et plus petite lorsque l'interrupteur à thyristor (TS) est ouvert.

2. Compensateur de puissance réactive suivant la revendication 1, caractérisé en ce que

a) la réactance inductive est une bobine de self (D) d'un circuit de décharge, avec noyau de fer,

b) le noyau de fer de la bobine de self (D) du circuit de décharge est au moins largement insaturée pour le courant qui la traverse lorsque l'interrupteur à thyristor (TS) est fermé et se sature progressivement pour des courants croissants, et

c) la résistance de l'enroulement est dimensionnée de telle sorte que le phénomène de décharge correspond à une oscillation fortement amortie ou apériodique.

3. Compensateur de puissance réactive suivant la revendication 1 ou 2, caractérisé en ce qu'autour du noyau de fer de la bobine de self (D) du circuit de décharge est agencé un enroulement auxiliaire (ZW) auquel est raccordé un dispositif (E) pour la démagnétisation accélérée du noyau de fer.

4. Compensateur de puissance réactive suivant une des revendications 1 à 3, caractérisé en ce que l'enroulement de la bobine de self (D) du circuit de décharge est réparti sur la totalité du noyau de fer de préférence fermé sur lui-même.

5. Compensateur de puissance réactive suivant la revendication 1, caractérisé en ce que

a) la réactance inductive est l'impédance d'un transformateur (TR),

b) dans le circuit secondaire duquel est monté un élément de circuit (SS) contrôlable,

c) qui est ouvert, respectivement fermé à contre-temps par rapport à l'interrupteur à thyristor (TS), et

d) la résistance de l'enroulement est dimensionnée de telle sorte que le phénomène de décharge correspond à une oscillation fortement amortie ou apériodique.

6. Compensateur de puissance réactive suivant une des revendications précédentes, caractérisé en ce que

a) le condensateur (C) est raccordé en série avec l'interrupteur à thyristor (TS) via une bobine à air (D$_L$), et

b) un premier limiteur de tension (A$_1$) est raccordé en parallèle avec le montage en série constitué par la bobine à air (D$_L$) et l'interrupteur à thyristor (TS).

7. Compensateur de puissance réactive suivant une des revendications précédentes, caractérisé en ce qu'un second limiteur de tension (A$_2$) est raccordé en parallèle directement avec l'interrupteur à thyristor (TS).

8. Compensateur de puissance réactive suivant la revendication 7, caractérisé en ce que

a) le niveau de protection du premier limiteur de tension (A$_1$) est supérieur au double de l'amplitude de la tension du réseau (U$_N$) et

b) le second limiteur de tension (A$_2$) présente un niveau de protection au moins égal à celui du premier limiteur de tension (A$_1$).

9. Compensateur de puissance réactive suivant la revendication 7 ou 8, caractérisé en ce que le second limiteur de tension (A$_2$) est, en puissance, plus faible que le premier limiteur de tension (A$_1$).

10. Compensateur de puissance réactive suivant une des revendications 7 à 9, caractérisé en ce que

a) le premier et/ou le second limiteur de tension (A$_1$, A$_2$) est un parafoudre à oxyde métallique,

b) en particulier un parafoudre à l'oxyde de zinc.

FIG. 1

FIG. 2

FIG. 4

FIG. 3

FIG. 7

FIG. 5

FIG. 6